# EUROPEAN PATENT SPECIFICATION

(11) **EP 2 008 333 B1**
(45) Date of publication and mention of the grant of the patent: **06.04.2011**
(21) Application number: 06740622.3
(22) Date of filing: 07.04.2006
(51) Int. Cl.: H01M 8/10

(54) **COMPOSITE WATER MANAGEMENT ELECTROLYTE MEMBRANE FOR A FUEL CELL**
ZUSAMMENGSETZTE WASSERMANAGEMENT-ELEKTROLYTMEMBRAN FÜR EINE BRENNSTOFFZELLE
MEMBRANE ELECTROLYTE COMPOSITE DE GESTION D'ECOULEMENT DE L'EAU POUR UNE PILE A COMBUSTIBLE

(43) Date of publication of application: 31.12.2008
(73) Proprietor: UTC Power Corporation, South Windsor, CT 06074 (US)
(72) Inventor: DARLING, Robert, M., South Windsor, CT 06074 (US); PERRY, Michael, L., Glastonbury, CT 06033 (US)
(74) Representative: Klunker . Schmitt-Nilson . Hirsch
(86) International application number: PCT/US2006/012835
(87) International publication number: WO 2007/117230

(56) References cited:
- WO-A-98/50457
- US-A1- 2002 037 449
- US-A1- 2005 221 141

## Description

### Technical Field

The present invention relates to fuel cells that are suited for usage in transportation vehicles, portable power plants, or as stationary power plants, and the invention especially relates to a composite electrolyte membrane that facilitates water management within a fuel cell.

### Background Art

Fuel cells are well known and are commonly used to produce electrical power from hydrogen containing reducing fluid fuel and oxygen containing oxidant reactant streams to power electrical apparatus such as generators and transportation vehicles. In fuel cells of the prior art, it is known to utilize a proton exchange membrane ("PEM") as the electrolyte. As is well known, protons formed at the anode electrode move through the electrolyte to the cathode electrode, and it is generally understood that for each proton moving from the anode side to the cathode side of the electrolyte, approximately three molecules of water are dragged with the proton to the cathode side of the electrolyte. To prevent dry-out of the PEM, that dragged water must be replaced or returned to the anode side of the PEM by osmotic flow. Osmotic flow requires that the water content at the anode side of the PEM be less than at the cathode side to provide the required driving force. Additionally, during operation of the fuel cell, water is produced ("product water") at the cathode catalyst, and that product water may be moved to the anode side by flowing it directly through the PEM or through a water transport plate of a water management system that is in fluid communication with the product water and the anode catalyst.

It is critical that a proper water balance be maintained between a rate at which water is removed from the cathode catalyst and at which liquid water is supplied to the anode catalyst. If insufficient water is supplied or returned to the anode catalyst, adjacent portions of the PEM electrolyte dry out thereby decreasing a rate at which hydrogen ions may be transferred through the PEM. Dry-out of the PEM electrolyte also results in degradation of the PEM electrolyte. This can result in cross-over of the reactant fluid leading to local over heating. Additionally, it is known that support materials for electrode catalysts adjacent the electrolyte typically include carbon, and after usage such carbon support materials become hydrophilic. This tendency further complicates the task of removing product water from adjacent the cathode catalyst in maintaining fuel cell water balance.

Many approaches have been undertaken to enhance water transport of an electrochemical cell, including efforts to increase water permeability of the PEM. Those efforts include decreasing a thickness of the PEM, such as by production of an ultra-thin integral membrane disclosed in U.S. Patent 5,547,551 to Bahar et al., that issued on August 20, 1996, and U.S. Patent 5,599,614 that also issued to Bahar et al. on Feb. 4, 1997. While ultra-thin PEM electrolytes have enhanced water permeability, nonetheless, significant electrochemical cell performance limits result from restricted PEM water permeability and storage. More recently, U.S. Patent 6,841,283 issued on Jan. 11, 2005 to Breault (which Patent is owned by the owner of all rights in the present invention) for a high water permeability proton exchange membrane. The membrane disclosed in that patent includes about a 10% water filled microporous phase defined by structural materials within an ionomer phase.

However, because PEM electrolytes must conduct ions while being electrically nonconductive, the use of the structural materials is limited to electrically nonconductive materials. By increasing pore size to enhance water permeability, an electrolyte membrane has a lower bubble pressure rating and therefore increases a risk of pressure differentials causing a breach of the membrane leading to reactant mixing. Additionally, in order for known ultra-thin electrolyte membranes to have adequate mechanical strength to sustain fuel cell operating pressure differentials on opposed sides of the membrane, such ultra-thin membranes decrease water permeability. Consequently, with known fuel cells localized membrane degradation occurs due to dry-out of the PEM such as at reactant inlets of a fuel cell. Additionally, long-term fuel cell durability and performance is known to be degraded as a result of catalyst flooding with product water. Accordingly, there is a need for a fuel cell electrolyte membrane that enhances water management of the fuel cell.

### Disclosure of Invention

The invention refers to a membrane electrode assembly according to claim 1, including a composite electrolyte membrane for a fusel cell having first and second electrode catalysts. The membrane includes an ionomer component extending continuously between opposed first and second contact surfaces defined by the membrane. The ionomer component is a hydrated nanoporous ionomer consisting of a cation exchange resin. The membrane also includes a microporous region consisting of the ionomer component and a structural matrix selected from the group consisting of a particulate material, a whisker material, or a fibrous material. The structural matrix is dispersed through the microporous region within the ionomer to define open pores having a diameter of between 0.3 and 1.0 microns. The microporous region is disposed between the first and second contact surfaces of the membrane and is adjacent either only the first contact surface or only the second contact surface, or alternatively, the microporous region is adjacent neither the first contact surface nor the second contact surface. In all embodiments the microporous regions does not extend between the first and second contact surfaces of the membrane. The composite electrolyte membrane is secured adjacent an electrode catalyst of the fuel cell.

In a preferred embodiment, the composite electrolyte membrane is secured within the fuel cell so that the microporous region is disposed adjacent the first contact surface of the membrane and the first contact surface of the membrane is secured adjacent a cathode electrode catalyst of the fuel cell. In this embodiment, the larger pores of the microporous region of the membrane will be closest to the cathode catalyst, while smaller nanopores within only the ionomer component are closest to the anode catalyst. By this arrangement, the composite electrolyte membrane serves as a water sink for product water generated at the cathode catalyst, while the finer pores closest to the anode catalyst will serve to draw the water by capillary action from the larger pores toward the smaller pores adjacent the anode catalyst to thereby facilitate hydration of the PEM adjacent the anode catalyst.

In a further embodiment, the structural matrix may be selected to be the same material as structural material supporting the catalysts, such as carbon. Therefore, as the carbon support of the catalysts becomes increasingly hydrophilic over prolonged usage of the fuel cell, the carbon within the microporous region will also become increasingly hydrophilic. Because the microporous region is between the two catalysts, product water at the cathode catalyst will therefore be drawn into the hydrophilic carbon of the microporous region to effectively remove water from the cathode catalyst that could otherwise flood the cathode and impede flow of oxidant by the cathode.

Moreover, because the microporous region does not extend between the opposed contact surfaces of the membrane, the electrically conductive carbon within the membrane will not provide a short circuit between the catalysts. Further alternative embodiments provide for varying dispositions of the microporous region within the membrane to facilitate enhanced water management for specific operating requirements of varying types of fuel cells.

Accordingly, it is a general purpose of the present invention to provide a composite water management electrolyte membrane for a fuel cell that overcomes deficiencies of the prior art.

It is a more specific purpose to provide a composite water management electrolyte membrane for a fuel cell that may provide for long term stability of water movement within the membrane during usage of the fuel cell.

These and other purposes and advantages of the present composite water management electrolyte membrane for a fuel cell will become more readily apparent when the following description is read in conjunction with the accompanying drawings.

### Brief Description of the Drawings

Figure 1 is a simplified schematic representation of a composite water management electrolyte membrane for a fuel cell constructed in accordance with the present invention.

Figure 2 is a simplified schematic representation of an alternative embodiment of a composite water management membrane for a fuel cell of the present invention.

Figure 3 is a simplified schematic representation of a fuel cell using a composite water management electrolyte membrane of the present invention.

### Description of the Preferred Embodiments

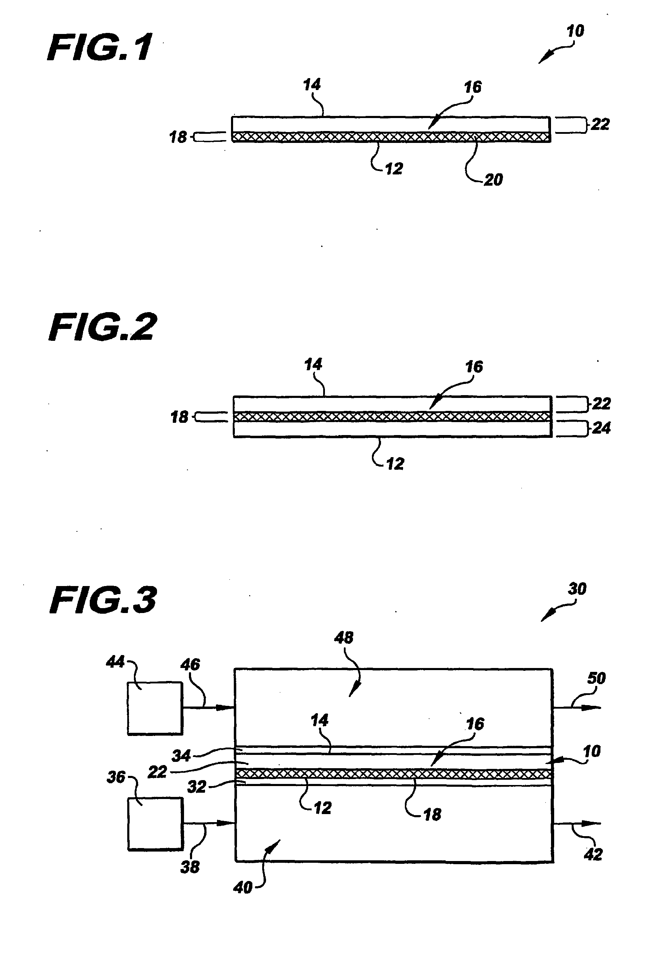

Referring to the drawings in detail, a composite electrolyte membrane is shown in FIG. 1, and is generally designated by the reference numeral 10. The membrane 10 defines a first contact surface 12 and an opposed second contact surface 14. (By the phrase "contact surface", it is meant that the membrane 10 is a generally flat, disk-shaped construction, and the "contact surfaces" of the membrane 10 are constructed to be positioned in intimate contact with adjacent layers of a fuel cell, as opposed to being at a perimeter of the membrane 10.) An ionomer component 16 extends continuously between the contact surfaces 12, 14 of the membrane. A microporous region 18 is defined within the ionomer component 16 between the first and second contact surfaces 12, 14. The ionomer component 16 is a hydrated nanoporous ionomer that consists of any suitable cation exchange resin that is compatible with an operating environment of an electrochemical cell. An exemplary material for constituting the hydrated nanoporous ionomer component 16 is a perflourosulfonic acid ionomer sold under the brand name "NAFION" by the E.I. DuPont company of Wilmington, Delaware, U.S.A. that has open pores having a diameter of about 0.004 microns when the ionomer is hydrated. (For purposes herein, the word "about" is to mean plus or minus 20 percent.)

By the phrase "open pores", it is meant that the pores provide an open channel for movement of water between the opposed first and second contact surfaces 12, 14 of the membrane 10. In a preferred embodiment, the thickness of the composite electrolyte membrane 10 is between 10 - 25 microns. The thickness of membrane 10 is defined as a shortest distance between the first and opposed second contact surfaces 12, 14. Known perflourosulfonic acid ionomer membranes typically have an average open pore diameter of about 4 nanometers, or 0.004 microns, with an average wetted porosity of about 40%, or about 26.5 weight percent water. Water retention and permeability of porous membranes is a complicated function of diameter of open or through voids and porosity, as described by a "Carman-Kozeny" equation, known in the art. One mechanism to significantly increase water retention and permeability of a porous membrane is to increase a pore size or diameter of open pores or voids within the membrane 10 into the micrometer range. A membrane with a pore size of 0.3 microns and a porosity of 10% has a permeability that is an order of magnitude higher than the standard, aforesaid "NAFION" proton exchange membrane ("PEM"). A structure with a pore size of 1.0 microns and a porosity of 10% has a permeability that is two orders of magnitude higher than the "NAFION" PEM.

The microporous region 18 serves to increase the pore size of the membrane 10, but only within the microporous region 18. The microporous region 18 includes a structural matrix 20 dispersed within the ionomer compound 16. The structural matrix 20 may consist of electrolyte retaining matrix separators used in aqueous electrolyte cells that are electrically nonconductive, such as disclosed in the aforesaid U.S. Patent 6,841,283 to Breault, or may include electrically conductive structural materials known in the art and used to support catalysts of fuel cell electrodes, such as carbon. For example, the structural matrix 20 may be composed of the same carbon that is used in a first electrode catalyst 32 adjacent the surface 12, so that any changes in hydrophilicity are well matched.

The microporous region 18 may be constructed as a separate layer 18 and then secured to an ionomer compound layer 22 to form the membrane 10, as shown in FIG. 1. Alternatively, as shown in FIG. 2, the microporous region 18 may constructed as a separate layer 18 secured between the first separate ionomer compound layer 22 and a separate second ionomer compound layer 24 so that the microporous region 18 is adjacent neither the first contact surface 12 nor the second contact surface 14 of the membrane 10. The microporous region 18 may be formed by methods known in the art such as those disclosed in the aforesaid U.S. Patent No. 6,841,283. For example, it should be appreciated that the composite electrolyte membrane 10 is somewhat analogous to a traditional membrane electrode assembly ("MEA") known in the art, which consists of a PEM with composite catalyst layers adjacent to each side of the PEM. The microporous region 18 is analogous to those catalyst layers, with the exception that instead of incorporating a carbon-supported catalyst, the structural matrix is composed of non-catalyzed carbon some similar structural material. Additionally, the microporous region 18 may be located on just one side of the ionomer layer 16 as shown in FIG. 1, or sandwiched between ionomer layers as shown in FIG. 2. In either structure, the means to manufacture the composite electrolyte membrane 10 can be similar to the methods used to construct known membrane electrode assemblies. A variety of MEA manufacturing methods have been extensively described in the prior art. For example, one can use the MEA manufacturing techniques described in U.S. Patent No. 6,641,862, and references cited therein. As described therein, one of the most critical characteristics will be the pore size of the resulting microporous regions and the same techniques used to control this characteristic in the MEA catalyst layers (e.g., varying ionomers to carbon ratios, altering the type of carbon used, changing the type or amount of solvent used, etc.) may also be utilized in producing the composite electrolyte membrane 10 of the present invention. Alternatively, to manufacture the microporous region 18, one could use methods similar to those used to form bi-layers, as described in U.S. Patent No. 4,233,181 (which Patent is owned by the owner of all rights in the present invention), with an exception that instead of using "TEFLON" brand PTFE, as the polymer phase one would use a "NAFION" brand perflourosulfonic acid ionomer or some other ionomer. One could then solution cast ionomer layers adjacent to the microporous region to form a complete composite electrolyte membrane 10. In a further alternative, one could use the methods described in the aforesaid U.S. Patent 6,841,283 to form the microporous region, and then solution cast ionomer layers adjacent the microporous region.

FIG. 3 shows a simplified schematic view of a fuel cell 30 using the composite electrolyte membrane 10 of the present invention. The fuel cell 30 includes the first electrode catalyst 32 secured adjacent the first contact surface 12 of the membrane 10, and a second electrode catalyst 34 secured adjacent the opposed second contact surface 14 of the membrane 10. As is well known in the art, the fuel cell 10 also includes a first reactant storage source 36 that directs a first reactant, such as an oxidant, through a first reactant inlet line 38 and then through a first electrode flow field 40 and out of the fuel cell through a first electrode exhaust line 42. The fuel cell 30 also includes a second reactant storage source 44 that directs a second reactant, such as a hydrogen containing reducing fluid, through a second reactant inlet line 46 and then through a second electrode flow field 48 and out of the fuel cell 30 through a second electrode exhaust line 50. The first electrode flow field 40 directs the first reactant to pass adjacent the first electrode catalyst 32 while the second electrode flow field 48 directs the second reactant to pass adjacent the second electrode catalyst 34 to produce an electrical current in a manner well known in the art, such as described in the aforesaid U.S. Patent 6,841,283.

In a preferred embodiment as shown in FIG. 3, the microporous region 18 is disposed within the composite electrolyte membrane 10 adjacent the first contact surface 12 of the membrane 10 which is adjacent the first electrode catalyst 32 which is a cathode catalyst 32, while the second contact surface 14 is secured adjacent second electrode catalyst 34 which is an anode catalyst 34. As described above, by this disposition, the larger pores of the microporous region 18 are adjacent the cathode catalyst 32 and therefore serve as an effective water sink for product water generated by the cathode catalyst 32. Additionally, the smaller pores throughout the ionomer compound layer 22 serve to draw water by capillary action from the pores of the microporous region 18 so that the water within the ionomer compound layer 22 is adjacent the anode catalyst 34. As described above, the anode catalyst 32 is especially sensitive to drying out, and this preferred embodiment of the composite electrolyte membrane 10 serves to facilitate water management to support hydration of the anode catalyst 32.

By use of the composite electrolyte membrane 10, because the microporous region 18 never extends between the opposed first and second contact surfaces 12, 14, there is always an ionomer compound layer 22 between the first and second electrode catalysts 32, 34. Therefore, the membrane 10 will maintain a high bubble pressure because the very small nanopores of the ionomer compound layer will tend to hold water against a substantial pressure differential on opposed sides of the membrane 10, thereby providing a substantial gaseous seal between the first and second electrode catalysts 32, 34 for the operating fuel cell 30. In contrast, if the larger pores of the microporous region 18 extended through the entire thickness of the membrane 10 between the first and second contact surfaces 12, 14, such as in known membranes, then the bubble pressure of the membrane would be substantially lower. Additionally, because the microporous region does not extend between the opposed contact surfaces 12, 14 of the membrane, the structural matrix 20 may be a conductive material, such as carbon.

In another preferred embodiment, the pores within the microporous region 18 are only partially filled during maximum performance conditions of the fuel cell 10. By being only partially filled, the microporous region 18 provides an effective reservoir or water sink for storage of excess water during potentially flooding conditions. For example, if the cathode electrode catalyst 32 becomes hydrophilic after prolonged usage and the structural matrix 20 is the same as the support material for the cathode catalyst 32, then the partially filled microporous region 18 will also become more hydrophilic to readily store excess water in flooding conditions. In contrast, during potentially drying conditions, such as when the relative humidity of ambient atmospheric oxidant drops or when the reducing fluid reactant has a low relative humidity, then the microscopic region 18 becomes a source of stored water to hydrate the electrode catalysts 32, 34.

The composite electrolyte membrane 10 may be disposed within the fuel cell 30 as shown in FIG. 3 and described above, or in contrast the membrane 10 may be disposed in alternative arrangements. For example, the microporous region 18 may be secured adjacent the second contact surface 14 to be adjacent the second or anode electrode catalyst 34 for certain operating conditions of a fuel cell. The embodiment of the membrane 10 shown in FIG. 2 could also be deployed within a fuel cell to meet specific fuel cell requirements. Additionally, the microscopic region 18 may be formed to only correspond to a portion or portions of the contact surfaces 12, 14, to possibly assist in the hydration of water stress regions (not shown) of electrode catalysts, such as adjacent reactant inlets and/or outlets. Also, the microscopic region 18 may have varying thicknesses to provide graded porosity so that the region 18 is thicker where the region 18 overlies an area of heightened water stress, such as adjacent reactant inlets and/or outlets, and the microscopic region 18 is thinner throughout the remainder of the region 18.

The structural matrix 20 may also be distributed throughout the microscopic region so that the porosity of the microscopic region varies to satisfy specific water stress parameters. For example, the structural matrix 20 may be disposed to define a maximum porosity within an area of the region 18 adjacent an area of an electrode catalyst susceptible to flooding, while within the remainder of the microscopic region the structural matrix defines a substantially lower porosity.

Consequently, it can be seen that the composite electrolyte membrane 10 of the present invention provides for significant enhancement in fuel cell water management with extraordinary flexibility both in potential construction options of the microscopic region 18 of the membrane 10 and also in arrangements of the membrane 10 within the fuel cell 30.

The present invention also includes a method of managing movement of water within a fuel cell 30, including the steps of flowing a first reactant adjacent a first electrode catalyst 32, flowing a second reactant adjacent a second electrode catalyst 34, flowing product water generated at one of the electrode catalysts 32, 34 into pores defined within a microporous region 18 of a composite electrolyte membrane 10 secured between the first and second electrode catalysts 32, 34, flowing the water within the pores defined by the microscopic region 18 into pores defined by an ionomer compound of the membrane 10, and flowing the water stored within the composite electrolyte membrane 10 to the other of the electrode catalysts 32, 34.

While the present invention has been disclosed with respect to the described and illustrated composite electrolyte membrane 10, it is to be understood that the invention is not to be limited to those embodiments. For example, while the fuel cell 30 is shown for purposes of explanation as a single cell 30, it is to be understood that the use of the fuel cell 30 is more likely to be within a variety of adjacent fuel cells (not shown) arranged with cooperative manifolds, etc., in a well know fuel cell stack assembly. Accordingly, reference should be made primarily to the following claims rather than the foregoing description to determine the scope of the invention.

## Claims

1. A fuel cell membrane electrode assembly including a composite electrolyte membrane (10), a cathode electrode catalyst (32) and an anode electrode catalyst (34) adjacent opposed first (12) and second (14) contact surfaces defined by the composite electrolyte membrane (10), the composite electrolyte membrane (10) comprising:
a) an ionomer component (16) extending continuously between the opposed first (12) and second (14) contact surfaces defined by the membrane (10), the ionomer component (16) being a hydrated nanoporous ionomer consisting of a cation exchange resin; and
b) a microporous region (18) consisting of the ionomer component (16), a structural matrix (20) selected from the group consisting of a particulate material, a whisker material, or a fibrous material within the ionomer component (16) and defining open pores having a diameter of between 0.3 and 1.0 µm (microns), the microporous region (18) being disposed adjacent only the first contact surface (12) of the membrane (10), the first contact surface (12) being disposed adjacent the cathode electrode catalyst (32) of the membrane electrode assembly, and the second contact surface (14) being disposed adjacent the anode electrode catalyst (34) of the membrane electrode assembly.

2. The fuel cell membrane electrode assembly of claim 1, wherein a thickness of the composite electrolyte membrane (10) is between about 10 and 25 µm (microns), the thickness of the composite electrolyte membrane (10) being defined as a shortest distance between the first and opposed second contact surfaces (12, 14).

3. The fuel cell membrane electrode assembly of claim 1 or 2, wherein the structural matrix (20) of the microporous region (18) is electrically conductive.

4. A method of managing movement of water within a fuel cell (30) including a fuel cell membrane electrode assembly as claimed in anyone of claims 1 to 3, the method comprising the steps of:
a) flowing a first reactant adjacent the cathode electrode catalyst (32), and flowing a second reactant adjacent the anode electrode catalyst (34);
b) flowing product water generated at the cathode electrode catalyst (32) into pores defined within the microporous region (18) of the composite electrolyte membrane (10);
c) flowing the water within the pores defined by the microporous region (18) into pores defined by the ionomer component (16) of the composite electrolyte membrane (10); and
d) flowing the water stored within the composite electrolyte membrane (10) to the anode electrode catalyst (34).

5. Use of a composite electrolyte membrane (10) as a constituent of a fuel cell membrane electrode assembly comprising a cathode electrode catalyst (32) and an anode electrode catalyst (34) adjacent opposed first (12) and second (14) contact surfaces defined by the composite electrolyte membrane (10), the first contact surface (12) being disposed adjacent the cathode electrode catalyst (32) of the membrane electrode assembly, and the second contact surface (14) being disposed adjacent the anode electrode catalyst (34) of the membrane electrode assembly,
wherein the composite electrolyte membrane (10) comprises:
a) an ionomer component (16) extending continuously between the opposed first (12) and second (14) contact surfaces defined by the membrane (10), the ionomer component (16) being a hydrated nanoporous ionomer consisting of a cation exchange resin; and
b) a microporous region (18) consisting of the ionomer component (16), a structural matrix (20) selected from the group consisting of a particulate material, a whisker material, or a fibrous material within the ionomer component (16) and defining open pores having a diameter of between 0.3 and 1.0 µm (microns), the microporous region (18) being disposed adjacent only the first contact surface (12) of the membrane (10).

## Patentansprüche

1. Brennstoffzellen-Membranelektrodenanordnung umfassend eine Verbund-Elektrolytmembran (10), einen Kathodenelektrodenkatalysator (32) und einen Anodenelektrodenkatalysator (34), die einander entgegengesetzten ersten (12) und zweiten (14) Kontaktoberflächen, die durch die Verbund-Elektrolytmembran (10) definiert werden, benachbart sind, wobei die Verbundelektrolytmembran (10) aufweist:
(a) eine lonomerkomponente (16), die sich kontinuierlich zwischen den einander entgegengesetzten ersten (12) und zweiten (14) Kontaktoberflächen, die durch die Membran (10) definiert werden, erstreckt, wobei die lonomerkomponente (16) ein hydratisiertes nanoporöses lonomer ist, das aus einen Kationenaustauscherharz besteht; und
(b) einen mikroporösen Bereich (18), der aus der Ionomerkomponente (16), einer Strukturmatrix (20), die ausgewählt ist aus der Gruppe, die besteht aus einem Teilchenmaterial, einem Whiskermaterial oder einem Fasermaterial, innerhalb der Ionomerkomponente (16) besteht, und der offene Poren mit einem Durchmesser von zwischen 0,3 und 1,0 µm (Micron) definiert, wobei der mikroporöse Bereich (18) nur der ersten Kontaktoberfläche (12) der Membran (10) benachbart angeordnet ist, wobei die erste Kontaktoberfläche (12) dem Kathodenelektrodenkatalysator (32) der Membranelektrodenanordnung benachbart angeordnet ist und die zweite Kontaktoberfläche (14) dem Anodenelektrodenkatalysator (34) der Membranelektrodenanordnung benachbart angeordnet ist.

2. Brennstoffzellen-Membranelektrodenanordnung nach Anspruch 1, bei der eine Dicke der Verbund-Elektrolytmembran (10) zwischen etwa 10 und 25 µm (Micron) liegt, wobei die Dicke der Verbund-Elektrolytmembran (10) als eine kürzeste Entfernung zwischen der ersten und der entgegengesetzten zweiten Kontaktoberfläche (12, 14) definiert ist.

3. Brennstoffzellen-Membranelektrodenanordnung nach Anspruch 1 oder 2, bei der die Strukturmatrix (20) des mikroporösen Bereichs (18) elektrisch leitfähig ist.

4. Verfahren zur Bewerkstelligung der Bewegung von Wasser innerhalb einer Brennstoffzelle (30), die eine Brennstoffzellen-Membranelektrodenanordnung, wie sie in einem der Ansprüche 1 bis 3 beansprucht ist, umfasst, wobei das Verfahren folgende Schritte aufweist:
a) Strömenlassen eines ersten Reaktionsmittels nahe an dem Kathodenelektrodenkatalysator (32), und Strömenlassen eines zweiten Reaktionsmittels nahe an dem Anodenelektrodenkatalysator (34);
b) Strömenlassen von Produktwasser, das an dem Kathodenelektrodenkatalysator (32) erzeugt wurde, in Poren, die innerhalb des mikroporösen Bereichs (18) der Verbund-Elektrolytmembran (10) definiert sind;
c) Strömenlassen des Wassers innerhalb der Poren, die durch den mikroporösen Bereich (18) definiert werden, in Poren, die durch die lonomerkomponente (16) der Verbund-Elektrolytmembran (10) definiert werden; und
d) Strömenlassen des Wassers, das innerhalb der Verbund-Elektrolytmembran (10) gespeichert ist, zu dem Anodenelektrodenkatalysator (34).

5. Verwendung einer Verbund-Elektrolytmembran (10) als einen Bestandteil einer Brennstoffzellen-Membranelektrodenanordnung, die einen Kathodenelektrodenkatalysator (32) und einen Anodenelektrodenkatalysator (34), die einander entgegengesetzten ersten (12) und zweiten (14) Kontaktoberflächen, die durch die Verbund-Elektrolytmembran (10) definiert werden, benachbart sind, aufweist, wobei die erste Kontaktoberfläche (12) dem Kathodenelektrodenkatalysator (32) der Membranelektrodenanordnung benachbart angeordnet ist, und die zweite Kontaktoberfläche (14) dem Anodenelektrodenkatalysator (34) der Membranelektrodenanordnung benachbart angeordnet ist,
wobei die Verbund-Elektrolytmembran (10) aufweist:
a) eine lonomerkomponente (16), die sich kontinuierlich zwischen den einander entgegengesetzten ersten (12) und zweiten (14) Kontaktoberflächen, die durch die Membran (10) definiert werden, erstreckt, wobei die lonomerkomponente (16) ein hydratisiertes nanoporöses lonomer ist, das aus einem Kationenaustauscherharz besteht; und
b) einen mikroporösen Bereich (18), der besteht aus der Ionomerkomponente (16), einer Strukturmatrix (20), die ausgewählt ist aus der Gruppe, die besteht aus einem Teilchenmaterial, einem Whiskermaterial oder einem Fasermaterial, innerhalb der Ionomerkomponente (16), und der offene Poren mit einem Durchmesser von zwischen 0,3 und 1,0 µm (Micron) definiert, wobei der mikroporöse Bereich (18) nur der ersten Kontaktoberfläche (12) der Membran (10) benachbart angeordnet ist.

## Revendications

1. Ensemble d'électrodes à membrane de pile à combustible comprenant une membrane à électrolyte composite (10), un catalyseur à électrode de cathode (32) et un catalyseur à électrode d'anode (34) adjacents à des première (12) et deuxième (14) surfaces de contact opposées définies par la membrane à électrolyte composite (10), la membrane à électrolyte composite (10) comprenant :
a) un composant ionomère (16) s'étendant en continu entre les première (12) et deuxième (14) surfaces de contact opposées définies par le membrane (10), le composant ionomère (16) étant un ionomère nanoporeux hydraté constitué d'une résine échangeuse de cations ; et
b) une région microporeuse (18) constituée du composant ionomère (16), une matrice structurale (20) choisie dans le groupe constitué d'un matériau particulaire, un matériau de trichite, ou un matériau fibreux dans le composant ionomère (16) et définissant des pores ouverts ayant un diamètre compris entre 0,3 et 1,0 µm (micron), la région microporeuse (18) étant disposée en position adjacente uniquement à la première surface de contact (12) de la membrane (10), la première surface de contact (12) étant disposée en position adjacente au catalyseur à électrode de cathode (32) de l'ensemble d'électrode à membrane, et la deuxième surface de contact (14) étant disposée en position adjacente au catalyseur à électrode d'anode (34) de l'ensemble d'électrode à membrane.

2. Ensemble d'électrodes à membrane de pile à combustible de la revendication 1, dans lequel l'épaisseur de la membrane à électrolyte composite (10) est comprise entre environ 10 et 25 µm (microns), l'épaisseur de la membrane à électrolyte composite (10) étant définie comme étant la distance la plus courte entre la première surface de contact et la deuxième surface de contact opposée (12, 14).

3. Ensemble d'électrodes à membrane de pile à combustible de la revendication 1 ou 2, dans lequel la matrice structurale (20) de la région microporeuse (18) est électriquement conductrice.

4. Procédé de gestion du mouvement d'eau dans une pile à combustible (30) comprenant un ensemble d'électrodes à membrane de pile à combustible selon l'une quelconque des revendications 1 à 3, le procédé comprenant les étapes de :
a) écoulement d'un premier réactif adjacent au catalyseur à électrode de cathode (32), et écoulement d'un deuxième réactif adjacent au catalyseur à électrode d'anode (34) ;
b) écoulement d'eau produit générée au niveau du catalyseur à électrode de cathode (32) dans des pores définis dans la région microporeuse (18) de la membrane à électrolyte composite (10) :
c) écoulement de l'eau dans les pores définis par la région microporeuse (18) dans des pores définis par le composant ionomère (16) de la membrane à électrolyte composite (10) ; et
d) écoulement de l'eau stockée dans la membrane à électrolyte composite (10) vers le catalyseur à électrode d'anode (34).

5. Utilisation d'une membrane à électrolyte composite (10) en tant que constituant d'un ensemble d'électrodes à membrane de pile à combustible comprenant un catalyseur à électrode de cathode (32) et un catalyseur à électrode d'anode (34) en position adjacente à des première (12) et deuxième (14) surfaces de contact opposées définies par la membrane à électrolyte composite (10), la première surface de contact (12) étant disposée en position adjacente au catalyseur à électrode de cathode (32) de l'ensemble d'électrode à membrane, et la deuxième surface de contact (14) étant disposée en position adjacente au catalyseur à électrode d'anode (34) de l'ensemble d'électrodes à membrane,
dans lequel la membrane à électrolyte composite (10) comprend :
a) un composant ionomère (16) s'étendant en continu entre les première (12) et deuxième (14) surfaces de contact opposées définies par le membrane (10), le composant ionomère (16) étant un ionomère nanoporeux hydraté constitué d'une résine échangeuse de cations ; et
b) une région microporeuse (18) constituée du composant ionomère (16), une matrice structurale (20) choisie dans le groupe constitué d'un matériau particulaire, un matériau de trichite, ou un matériau fibreux dans le composant ionomère (16) et définissant des pores ouverts ayant un diamètre compris entre 0,3 et 1,0 µm (micron), la région microporeuse (18) étant disposée en position adjacente uniquement à la première surface de contact (12) de la membrane (10).
